# EUROPÄISCHE PATENTSCHRIFT

(11) **EP 3 100 928 B1**
(45) Veröffentlichungstag und Bekanntmachung des Hinweises auf die Patenterteilung: **09.05.2018**
(21) Anmeldenummer: 16172001.6
(22) Anmeldetag: 30.05.2016
(51) Int. Cl.: B61C 17/00, B61C 17/06

(54) **FAHRZEUG MIT EINEM TRAGSYSTEM**
VEHICLE WITH A SUPPORT SYSTEM
VEHICULE DOTE D'UN SYSTEME DE SUPPORT

(30) Priorität: 01.06.2015 DE 102015108657
(43) Veröffentlichungstag der Anmeldung: 07.12.2016
(73) Patentinhaber: Bombardier Transportation GmbH, 10785 Berlin (DE)
(72) Erfinder: Göpel, Jörg, 13187 Berlin (DE)
(74) Vertreter: Zimmermann & Partner Patentanwälte mbB

(56) Entgegenhaltungen:
- EP-A1- 0 718 169
- WO-A1-2012/095596
- DE-A1-102012 206 663
- DE-C1- 19 949 243
- DE-U1- 9 110 143
- US-A1- 2004 143 961
- US-A1- 2004 157 117

## Beschreibung

### Technisches Gebiet

Die vorliegende Erfindung betrifft ein Fahrzeug, insbesondere ein Schienenfahrzeug, mit einem Tragsystem zur Anbringung einer austauschbaren Komponente an einem Unterflurbereich des Fahrzeugs. Weiterhin betrifft die Erfindung ein Verfahren zum Ein- und/oder Ausbau einer solchen austauschbaren Komponente des Fahrzeugs.

### Vorbekannter Stand der Technik

Im Allgemeinen ist bekannt, dass ein Unterflurbereich von Fahrzeugen, wie zum Beispiel von Bussen, Lastkraftwagen oder Schienenfahrzeugen, dazu genutzt wird, unterschiedliche funktionale Komponenten dort anzuordnen. Beispielsweise sind bei Lastkraftwagen Behältnisse für Kraftstoff an einem Unterflurbereich des Fahrzeugrahmens montiert.

Weiterhin können am Unterflurbereich, insbesondere in sogenannten Unterbodenfächern von Fahrzeugen elektrische Komponenten, zum Beispiel Umrichter, Klimageräte, Schaltungen oder auch elektrische Energiespeicher vorgesehen sein. Um ein fehlerfreies Funktionieren solcher Komponenten sicherzustellen, sind regelmäßige Wartung und gegebenenfalls ein Austausch von Komponenten notwendig.

Aus der europäischen Patentschrift EP 1 465 296 B1 ist eine Vorrichtung eines Schienenfahrzeugs bekannt, mittels welcher der Austausch einer Batterie erleichtert wird. Die Batterie ist in einem abgeschlossenen Unterbodenfach angeordnet, wobei diese auf einem rollbaren Untergrund gelagert ist. Indem eine Arbeitsbühne in einer dem Unterbodenfach angepassten Höhe vor dem aufgeklappten Unterbodenfach angeordnet wird, kann die Batterie aus dem Unterbodenfach auf die Arbeitsbühne herausgeholt werden.

Das Dokument WO 2012/095596 A1 beschreibt ein Fahrzeug, insbesondere Schienenfahrzeug, mit einem Tragsystem zur Anbringung einer austauschbaren Komponente an einem Unterflurbereich des Fahrzeugs, wobei das Tragsystem eine Aufnahmevorrichtung für die Komponente und eine ausziehbare Tragvorrichtung zum Abstützen der Aufnahmevorrichtung am Unterflurbereich aufweist, und wobei die Tragvorrichtung mindestens eine erste und eine zweite Schiene aufweist, wobei die erste Schiene an einer Tragstruktur des Unterflurbereichs befestigt ist, und die zweite Schiene direkt oder indirekt an der ersten Schiene verschiebbar abgestützt ist, und die Aufnahmevorrichtung an der zweiten Schiene befestigt ist.

Da die Batterie ein hohes Gewicht aufweisen kann, ist gemäß dem Stand der Technik vorgesehen, die Arbeitsbühne mit der Klappe des Unterbodenfachs formschlüssig zu verbinden. Auf diese Weise wird effektiv verhindert, dass während der Wartung oder des Austausches der Batterie die Kontrolle über selbige verloren geht und die Batterie beispielsweise zu Boden fällt.

### Nachteile des Standes der Technik

Um gemäß der Lehre des Stands der Technik Austausch und Wartung der Komponente zu erleichtern, ist ein technisches System von nicht unerheblicher Komplexität notwendig. Sowohl die Lagerung der Batterie in dem Unterbodenfach, als auch die Abstützung der Batterie außerhalb auf einer Arbeitsbühne erfordert eine hohe Anzahl zusätzlicher Bauteile.

Weiterhin ist für jede Wartung der Batterie die Positionierung der Arbeitsbühne notwendig, um die Batterie aus dem Unterbodenfach herausziehen zu können.

### Problemstellung

Aufgabe der vorliegenden Erfindung ist es daher, ein Tragsystem zur Anbringung einer austauschbaren Komponente an einem Unterflurbereich eines Fahrzeugs, insbesondere eines Schienenfahrzeugs, bereitzustellen, welches einen einfachen und robusten Aufbau aufweist. Zudem sollen Wartung und Austausch einer solchen Komponente vereinfacht werden.

### Erfindungsgemäße Lösung

Die obige Aufgabe wird durch ein Fahrzeug nach Anspruch 1 gelöst. Dabei weist das Fahrzeug ein Tragsystem auf, wobei das Tragsystem eine Aufnahmevorrichtung für die Komponente und eine ausziehbare Tragvorrichtung zum Abstützen der Aufnahmevorrichtung am Unterflurbereich umfasst. Dieses Tragsystem weist gemäß einer Ausführungsform eine erste und eine zweite Schiene auf, wobei zwischen einer Schiene und dem Unterflurbereich oder zwischen den Schienen eine Anschlagvorrichtung wirksam vorgesehen ist, die eine Sperrstellung und eine Entsperrstellung einnehmen kann.

Die Aufnahmevorrichtung ist an der zweiten Schiene befestigt, wobei die zweite Schiene wiederum direkt oder indirekt an der ersten Schiene verschiebbar abgestützt ist. Denkbar ist, dass die Schienen direkt ineinandergreifen und über direktem Bauteilkontakt Abstützungskräfte übertragen. Dazu können die Schienen jeweils ineinander greifende S-Profile aufweisen. Um die Verschiebung der Schienen zueinander zu erleichtern, ist dabei die Verwendung von Wälzmitteln zwischen den Schienen als vorteilhaft zu betrachten. Weiterhin ist die erste Schiene, welche die zweite Schiene direkt oder indirekt trägt, an einer Tragstruktur des Unterflurbereichs des Fahrzeugs befestigt. Dadurch kann die Aufnahmevorrichtung schubladenartig aus dem Unterflurbereich des Fahrzeugs in einer Ausziehrichtung herausgezogen und mittels einer Einschubbewegung eingeschoben werden.

Die Anschlagvorrichtung dient dazu, in Zusammenwirken mit einem ersten Schienenanschlag eine Verschiebung der Schienen zueinander in Ausziehrichtung zu begrenzen. In diesem Fall ist die Anschlagvorrichtung in einer Sperrstellung befindlich und aktiviert, wobei die Wirksamkeit der Abstützung der Schienen aneinander sichergestellt ist.

Wird die Anschlagvorrichtung in Entsperrstellung gebracht, so wird die Begrenzung der Verschiebung der Schienen zueinander in Ausziehrichtung aufgehoben und die Anschlagvorrichtung ist deaktiviert. In diesem Zustand können beide Schienen vollständig auseinander gezogen und getrennt werden.

Durch die beschriebene Ausbildung des Fahrzeugs mit Tragsystem wird erstmalig ermöglicht, in hocheffizienter Weise die Komponente zu Wartungs- oder Austauschzwecken zugänglich zu machen und gleichzeitig sicherzustellen, dass ein Herausfallen verhindert und somit das Verletzungsrisiko des Wartungspersonals verringert wird. Ist der Austausch der Komponente notwendig kann in einfacher Art und Weise die Aufnahmevorrichtung vollständig entnommen werden, indem die Anschlagvorrichtung deaktiviert wird.

Gemäß einer Ausführungsform weist die Tragvorrichtung mindestens eine dritte Schiene auf, wobei die zweite Schiene direkt oder indirekt über die dritte Schiene gegenüber der ersten Schiene verschiebbar abgestützt ist. Die dritte Schiene kann derart zwischen der ersten und zweiten Schiene angeordnet sein, sodass die zweite Schiene vollständig über die erste Schiene heraus verschiebbar ist, und im ausgezogenen Zustand keine Überdeckung zwischen erster und zweiter Schiene vorliegt. Auf diese Weise kann die Aufnahmevorrichtung und die darin oder daran vorgesehene Komponente besonders weit herausgezogen werden.

Grundsätzlich ist die Anzahl der verwendeten Schienen der Tragvorrichtung entsprechend den Anforderungen an die Tragvorrichtung anpassbar. Der Schutzbereich soll somit nicht auf eine Tragvorrichtung mit zwei oder drei Schienen begrenzt sein, sondern eine Verwendung einer Tragvorrichtung mit vier oder mehr Schienen ist - bei entsprechender Anpassung - denkbar.

Günstigerweise ist im Unterflurbereich ein Unterbodenfach vorgesehen, welches derart gestaltet ist, dass die Aufnahmevorrichtung in dieses eingeschoben und herausgezogen werden kann.

Gemäß einer Ausführungsform ist eine Außenseite der Aufnahmevorrichtung entsprechend einer Verkleidung des Fahrzeugs ausgebildet, sodass die eingeschobene Aufnahmevorrichtung zusammen mit der Verkleidung des Fahrzeugs eine im Wesentlichen homogene Oberfläche bildet. Anstatt eine solche blendenartige Verkleidung für die Aufnahmevorrichtung vorzusehen kann die Fahrzeugverkleidung im Bereich des Unterbodenfachs eine geeignete Klappenanordnung aufweisen, aus welcher die Aufnahmevorrichtung herausgezogen werden kann.

In Erweiterung dieses Grundprinzips wird erfindungsgemäß vorgeschlagen, dass das Tragsystem Rückstellmittel aufweist, wodurch die Anschlagvorrichtung der Tragvorrichtung durch die Einschubbewegung aktiviert wird bzw. in Sperrstellung gebracht wird. Das Rückstellmittel ist folglich derart angeordnet, dass die Anschlagvorrichtungsofern deaktiviert bzw. in Entsperrstellung befindlich - aktiviert wird, wenn die Aufnahmevorrichtung in den Unterflurbereich zurückgeschoben bzw. eingeschoben wird. Auf diese Weise wird sichergestellt, dass die Anschlagvorrichtung grundsätzlich aktiviert ist, bzw. Sperrstellung steht. Dadurch wird die Sicherheit für Wartungspersonal erheblich erhöht, denn es ist niemals möglich, dass die Aufnahmevorrichtung ungewollt über die Anschlagvorrichtung hinaus und somit vollständig herausgezogen wird und herabstürzen könnte.

Gemäß einer Ausführungsform weist die Anschlagvorrichtung ein Anschlagelement auf. Bevorzugt umfasst die Anschlagvorrichtung weiterhin ein auf das Anschlagelement wirkendes Vorspannmittel. Ist die Anschlagvorrichtung aktiviert, so wird das Anschlagelement durch das Vorspannmittel mit einer Vorspannkraft beaufschlagt, bzw. die Vorspannkraft des Vorspannmittels wird, relativ zur Vorspannkraft in Entsperrstellung, erhöht. Bei Erreichen einer festgelegten, maximalen Verschiebung der Schienen zueinander geht das Anschlagelement mit dem ersten Schienenanschlag automatisch in Eingriff und blockiert ein weiteres Auseinanderziehen der Schienen. Gegebenenfalls sind der erste Schienenanschlag und die Anschlagvorrichtung so gestaltet, dass das Anschlagelement in den Schienenanschlag einrastet. Dies bedeutet, dass das Wartungspersonal die Aufnahmevorrichtung soweit herausziehen kann, bis Schienenanschlag und Anschlagelement miteinander in Wirkeingriff gehen und somit die Bewegung des Auseinanderziehens gestoppt wird.

Anstatt der Verwendung des Schienenanschlags kann ein geeigneter Anschlag im Unterflurbereich oder im Unterbodenfach vorgesehen sein, welcher zusammen mit dem Anschlagelement in Wirkeingriff geht und so eine Bewegung in Ausziehrichtung begrenzt.

Im Rahmen einer weiteren Ausführungsform wird offenbart, dass der erste Schienenanschlag und/oder das Anschlagelement entgegen der Ausziehrichtung wirksam angeordnete Entriegelungsmittel aufweist. Dabei sind Entriegelungsmittel und das Anschlagelement derart ausgebildet, dass das Anschlagelement durch eine Einschubbewegung der Tragvorrichtung mit Hilfe der Entriegelungsmittel außer Eingriff gebracht werden kann. Durch diese Konzeption wird ermöglicht, dass die Blockierung der Verschiebung der Schienen zueinander nur in eine Richtung - in Ausziehrichtung - wirkt, jedoch ein Einschieben der Tragvorrichtung bzw. der Aufnahmevorrichtung zurück in das Unterbodenfachs nicht durch die Anschlagvorrichtung blockiert wird.

Denkbar ist, dass die Entriegelungsmittel zumindest eine schräge Fläche aufweisen, welche - basierend auf einer Keilwirkung - das Anschlagelement zurückschieben und außer Eingriff bringen kann, wenn die Aufnahmevorrichtung zurückgeschoben wird. Jedoch soll die konkrete Ausgestaltung der Entriegelungsmittel keine begrenzende Wirkung haben: Beispielsweise kann eine schräge Fläche - oder eine wirk-ähnliche Anordnung - an dem Schienenanschlag, an dem Anschlagelement oder auch als weiteres Bauteil vorgesehen sein.

Gemäß einer weiteren Ausführungsform wird vorgeschlagen, dass die Tragvorrichtung einen zweiten Schienenanschlag aufweist, mit welchem das Anschlagelement in eingeschobenem Zustand der Aufnahmevorrichtung in Eingriff bringbar ist. Auf diese Weise kann eine Einschubbewegung der Aufnahmevorrichtung begrenzt werden, in dem das Anschlagelement der Anschlagvorrichtung bei Erreichen einer gewissen Einschubposition mit dem zweiten Schienenanschlag in Wirkeingriff geht.

Gemäß einer weiteren Ausführungsform ist die Anschlagvorrichtung derart ausgebildet und an einer Schiene angeordnet, und weiterhin ist an einer anderen Schiene eine Aussparung derart vorgesehen, so dass das Anschlagelement in eingeschobenem Zustand der Tragvorrichtung von der Aussparung zumindest teilweise aufnehmbar ist. Aussparung und Anschlagvorrichtung sind somit so vorgesehen, dass das Anschlagelement der Anschlagvorrichtung in der Aussparung ruhen kann. Dadurch wird die Belastung der Vorspannmittel verringert. Das Anschlagelement rastet folglich in die Aussparung ein, wobei das Anschlagelement nicht zwingend mit einem Anschlag eine begrenzende Wirkung haben muss. Im Vordergrund steht hierbei der Effekt, dass die Vorspannmittel bei eingeschobener Position der Aufnahmevorrichtung zumindest teilweise entlastet sind, und dadurch deren Lebensdauer erhöht wird.

Gemäß einer Ausgestaltung sind die Aussparung und/oder das Anschlagelement mit Entriegelungsmitteln versehen. Diese wirken in Ausziehrichtung der Aufnahmevorrichtung und weisen dazu beispielsweise eine schräge Fläche auf, wobei durch die Ausziehbewegung der Eingriff des Anschlagelements in der Aussparung gelöst wird.

Gemäß einer weiteren Ausführungsform kann das Anschlagelement der Anschlagvorrichtung als Bolzen ausgeführt sein, welcher gemäß seiner Längsachse verschiebbar in einer Aufnahme der Anschlagvorrichtung aufgenommen ist. Bei aktivierter Anschlagvorrichtung überragt der Bolzen die Aufnahme der Anschlagvorrichtung gemäß seiner Längsrichtung und ist somit geeignet in einen Schienenanschlag, beispielsweise als Bohrung gestaltet, einzugreifen. Wird die Anschlagvorrichtung deaktiviert, so bewirkt eine geeignete Mechanik der Anschlagvorrichtung, dass der Bolzen zumindest teilweise in eine Aufnahme der Anschlagvorrichtung zurückgezogen wird und diese nicht mehr überragt. In diesem Zustand ist der Bolzen nicht in der Lage, mit einem Schienenanschlag in Eingriff zu gehen.

Die Anschlagvorrichtung ist vorzugsweise so ausgebildet, dass die Längsachse des Bolzens im Wesentlichen senkrecht zur Ausziehrichtung des Tragsystems verläuft.

Insbesondere kann der Bolzen der Anschlagvorrichtung federbelastet in der Aufnahme der Anschlagvorrichtung verschiebbar gelagert sein. Dadurch kann der Bolzen auch bei aktivierter Anschlagvorrichtung gegen die Vorspannkraft entgegen der Vorspannrichtung in die Anschlagvorrichtung eingeschoben werden.

Ein solches Einschieben des Bolzens bei aktivierter Anschlagvorrichtung kann günstiger Weise mithilfe der Entriegelungsmittel umgesetzt werden. Denkbar ist, dass dazu ein Schienenanschlag als Bohrung in einer Schiene ausgeführt ist. Die Bohrung ist so in der Schiene angeordnet, dass diese den Teil des Bolzens zumindest teilweise aufnehmen kann, welcher die Anschlagvorrichtung überragt. Dabei ist in Ausziehrichtung und/oder in Richtung der Einschubbewegung in einer Schiene eine rampenartige schräge Fläche vorgesehen. Diese schräge Fläche verbindet im Wesentlichen in stetiger Gestalt einen Boden der Bohrung und eine Oberfläche der Schiene. Weiterhin ist die Fläche derart geneigt, sodass beim Ausziehen oder beim Einziehen des Tragsystems der Bolzen der aktivierten Anschlagvorrichtung in die Aufnahme der Anschlagvorrichtung entgegen der Vorspannung eingeschoben wird, indem ein Teil einer Stirnseite des Bolzens die Fläche entlang gleitet.

Die Funktionsweise des oben genannten Ausführungsbeispiels soll im Folgenden erläutert werden: Sofern die Schienen zueinander nicht vollständig eingeschoben oder auseinandergezogen sind, liegt der Bolzen in zumindest teilweise eingeschobener Position in der Aufnahme der Anschlagvorrichtung vor. Dazu sind die Schienen derart benachbart zueinander angeordnet, sodass der Bolzen der Anschlagvorrichtung von einer Fläche einer Schiene entgegen der Vorspannrichtung in die Aufnahme der Anschlagvorrichtung gedrückt wird. Erreicht das Tragsystem nun eine Endposition - vollständig eingeschoben oder ausgezogen -, so fluchtet der als Bohrung ausgeführte Schienenanschlag mit dem Bolzen der Anschlagvorrichtung. Dieser springt federbelastet in die Bohrung des Schienenanschlags ein und blockiert ein weiteres Auseinander- oder Zusammenschieben des Tragsystems.

Ist das Tragsystem vollständig eingeschoben, so ruht der Bolzen - im Wesentlichen entlastet - in der Bohrung des zweiten Schienenanschlags. Ein weiteres Einschieben des Tragsystems wird dadurch verhindert, indem eine radiale Wandung der Bohrung mit einer radialen Außenseite des Bolzens im Eingriff steht, und so ein Formschluss zwischen den Schienen entgegen der Ausziehrichtung hergestellt ist. Um das Tragsystem ohne Deaktivierung der Anschlagvorrichtung ausziehen zu können, ist eine in Ausziehrichtung gelegene Seite der Bohrung mit der schrägen Fläche versehen, welche den Bolzen in die Aufnahme der Anschlagvorrichtung schiebt, sofern das Tragsystem ausgezogen wird.

Anhand eines weiteren Ausführungsbeispiels wird eine analoge Ausführung der Entriegelungsmittel für den ersten Schienenanschlag offenbart. Entsprechend ist eine radiale Seite der Bohrung des ersten Schienenanschlags in Ausziehrichtung vorhanden und eine schräge Fläche ist an der Bohrung in Richtung der Einschubbewegung vorgesehen.

Vorzugsweise ist die schräge Fläche in der Bohrung des ersten Schienenanschlags und/oder des zweiten Schienenanschlags so gestaltet, dass diese im Wesentlichen nahtlos in einen Boden der Bohrungen übergeht.

Wenn die Anschlagvorrichtung deaktiviert wird, ist der Bolzen im Wesentlichen vollständig in die Aufnahme der Anschlagvorrichtung zurückgezogen. In diesem Zustand ist ein Formschluss zwischen Bolzen und einer radialen Wandung einer Bohrung eines Schienenanschlags nicht vorhanden, so dass die Schienen vollständig auseinandergezogen werden können.

Um die Aufnahmevorrichtung bei deaktivierter Anschlagvorrichtung unter Zuhilfenahme von, beispielsweise, einer geeigneten Hubvorrichtung entnehmen zu können, weist die Aufnahmevorrichtung oder die zweite oder die dritte Schiene Mittel zur Befestigung eines Eingriffselement zum Eingreifen der externen Hubvorrichtung auf. Mittels dieser Maßnahme wird der Austausch oder Überprüfung von Komponenten der Aufnahmevorrichtung wesentlich erleichtert. Im Falle dass Batterien in der Aufnahmevorrichtung angeordnet sind, weisen diese beispielsweise ein hohes Gewicht auf. Indem die Verwendung einer externen Hubvorrichtung ermöglicht wird, kann in diesem Fall die Aufnahmevorrichtung inklusive Batterien ohne größere Schwierigkeiten zu und von einem Prüfstand oder Werktisch transportiert werden. Denkbar ist dabei die Verwendung eines Gabelstaplers. Für diesen Zweck können die Eingriffselemente entsprechend der Gabel des Gabelstaplers ausgeformt sein.

Gemäß einer Ausführungsform werden die Eingriffselemente an die Aufnahmevorrichtung montiert - zum Beispiel mittels Schrauben -, wenn diese aus dem Unterflurbereich des Fahrzeugs bereits herausgezogen ist. Dies hat den Vorteil, dass das gesamte Volumen des entsprechenden Unterflurbereichs ausschließlich für die Aufnahmevorrichtung verwendet werden kann und kein extra Bauraum für die Eingriffselemente die reserviert werden muss.

Eine oder mehrere der genannten Ausführungsformen des beschriebenen Tragsystems eines Fahrzeugs sind besonders vorteilhaft, wenn die auszutauschende oder zu überprüfende Komponente eine Batterieeinheit eines elektrisch angetriebenen Fahrzeugs ist. Es hat sich gezeigt, dass diese Batterieeinheiten regelmäßig gewartet und ausgetauscht werden müssen, da sie im Betrieb verstärkt beansprucht sind, um beispielsweise regenerierte Bremsenergie zwischenzuspeichern. Insbesondere weisen Batterieeinheiten ein hohes Gewicht auf, wodurch deren Handhabung bei Wartung und Austausch besonders anspruchsvoll ist. Durch die Gestaltung der Aufnahmevorrichtung der Batterieeinheit im Sinne des beschriebenen Tragsystems wird die Wartung und Austausch der Batterieeinheit erheblich vereinfacht.

Gemäß einer Ausführungsform ist die Aufnahmevorrichtung schubladenartig ausgebildet. Dabei ist an zwei vertikalen Seiten der Aufnahmevorrichtung jeweils eine Tragvorrichtung vorgesehen, womit die Aufnahmevorrichtung in dem Unterbodenfach des Fahrzeugs befestigt ist.

Im Rahmen der Erfindung wird weiterhin ein Verfahren zum Ausbau einer austauschbaren Komponente, Beispiel einer Batterieeinheit, eines Fahrzeugs angeführt. Dabei weist das Fahrzeug eine Tragvorrichtung gemäß einer der vorangehenden beschriebenen Ausführungsformen auf und das Verfahren umfasst die folgenden Schritte:

Die Aufnahmevorrichtung, welche die auszutauschen Komponente trägt, wird aus dem Unterbodenfach des Unterflurbereich des Fahrzeugs herausgezogen. Beispielsweise ist die auszutauschende Komponente eine Batterieeinheit eines Schienenfahrzeugs. Das Schienenfahrzeug wird dazu in eine Werkstätte gefahren, wo das entsprechende Personal die Überprüfung und einen eventuellen Austausch der Batterieeinheit vornehmen kann.

Um im Folgenden die Aufnahmevorrichtung günstig handhaben zu können, wird mindestens ein Eingriffselement an der Aufnahmevorrichtung oder an der zweiten oder dritten Schiene befestigt. Diese Eingriffselemente können entweder Haken oder Ösen für eine Kranvorrichtung oder auch für geeignete Aufnahmen für Hubvorrichtungen, zum Beispiel für einen Gabelstapler, sein. Da das Eingriffselement nicht in eingeschobenem Zustand der Aufnahmevorrichtung montiert ist, ist es erforderlich, dass diese in der Werkstätte vorgehalten wird.

Im folgenden Schritt wird die Hub- oder Kranvorrichtung wirksam am Eingriffselement positioniert. Dadurch kann die Gewichtskraft der Aufnahmevorrichtung im Wesentlichen von der Hub- oder Kranvorrichtung getragen werden, sodass im folgenden Schritt die Anschlagvorrichtung deaktiviert werden kann.

Nun ist das Tragsystem in einem Zustand, in welchem die Aufnahmevorrichtung vollständig vom Fahrzeug getrennt werden kann. Der Bearbeiter bringt die Anschlagvorrichtung in Entsperrstellung und zieht die Aufnahmevorrichtung soweit aus dem Unterflurbereich des Fahrzeugs, dass die Schienen außer Eingriff gehen und die Aufnahmevorrichtung ausschließlich durch die externe Hub- oder Kranvorrichtung getragen wird.

Nun kann eine Überprüfung oder Austausch der entsprechenden Komponente in der Aufnahmevorrichtung ausgeführt werden, indem die Aufnahmevorrichtung mittels der Hub- oder Kranvorrichtung zum dafür vorgesehenen Arbeits- oder Lagerplatz transportiert wird.

Gemäß einer Ausführungsform müssen spätestens vor dem Abtransport der Aufnahmevorrichtung gegebenenfalls vorhandene mechanische oder elektrische Mittel zur Verbindung der Komponente mit dem Fahrzeug unterbrochen werden. Wenn die Aufnahmevorrichtung eine Batterieeinheit trägt, wird vor Abtransport derselben die elektrische Verbindung der Batterieeinheit mit weiteren elektrischen Komponenten des Fahrzeugs unterbrochen.

Im Weiteren wird ein Verfahren zum Einbau der austauschbaren Komponente des Fahrzeugs angeführt. In einem ersten Schritt wird die Aufnahmevorrichtung mittels der Hub- oder Kranvorrichtung in eine geeignete Einbauposition vor dem Unterbodenfach des Unterflurbereichs des Fahrzeugs gebracht.

Nun wird die Schiene der Aufnahmevorrichtung mit einer Schiene des Unterbodenfachs in Eingriff gebracht, so dass die Tragvorrichtung die Gewichtskraft der Aufnahmevorrichtung in den Unterflurbereich des Fahrzeugs ableiten kann.

Da die Hub- oder Kranvorrichtung nicht mehr die Gewichtskraft der Aufnahmevorrichtung tragen muss, wird das Eingriffselement abmontiert. Nachdem weiterhin elektrische und/oder mechanische Verbindungen zwischen der Komponente und dem Fahrzeug hergestellt worden sind, kann die Aufnahmevorrichtung bzw. das Tragsystem vollständig in das Unterbodenfach eingeschoben werden.

Gemäß einer Ausführungsform wird ein vollständiges Verfahren zum Austausch einer Komponente eines Fahrzeugs offenbart, indem zuerst das oben beschriebene Verfahren zum Ausbau einer Komponente und das darauf folgende, vorbeschriebene Verfahren zum Einbau einer Komponente eines Fahrzeugs sequenziell angewendet werden.

Durch Anwendung einer oder mehrerer der genannten Ausführungsformen und/oder der beschriebenen Verfahren kann die Wartung und gegebenenfalls ein Austausch einer Komponente eines Fahrzeugs besonders einfach und schnell ausgeführt werden. Die beschriebenen Ausführungsformen sollen nicht limitierend auf die Erfindung wirken und sind jeweils miteinander in geeigneter Form kombinierbar, um weitere günstige Ausführungsformen zu bilden.

### Kurzbeschreibung der Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu.

Gleiche Bezugszeichen bezeichnen entsprechend gleiche oder ähnliche Teile.
Fig. 1 zeigt ein Schienenfahrzeug mit Unterbodenfächern,
Fig. 2 führt den Unterflurbereich des Schienenfahrzeugs gemäß Fig. 1 in vergrößerter Darstellung an,
Fig. 3a bis d zeigt eine schematische Seitenansicht einer ersten Ausführungsform eines Tragsystems in verschiedenen Zuständen, und
Fig. 4a bis d verdeutlicht eine zweite Ausführungsform eines Tragsystems in schematischer Darstellung.

### Ausführungsbeispiele

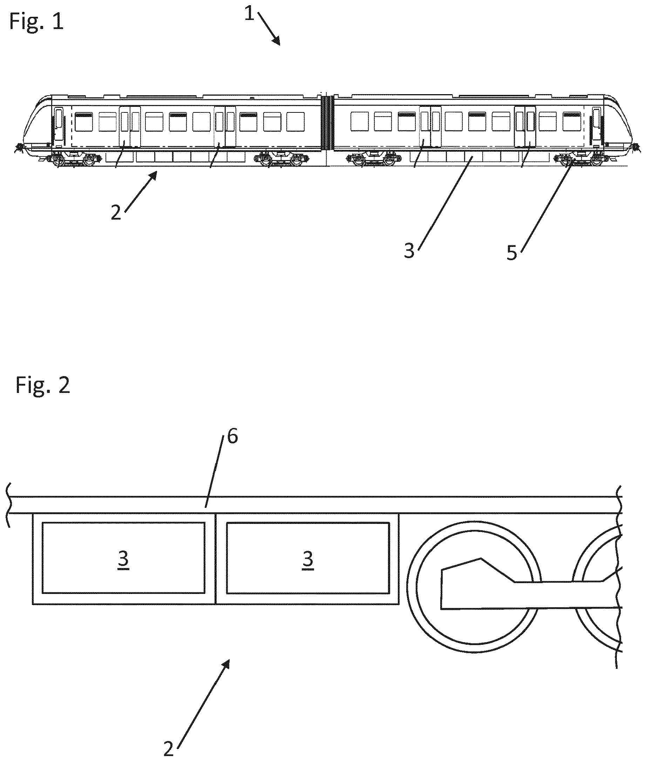

Ein typisches Schienenfahrzeug 1 mit einem Unterflurbereich 2 und daran vorgesehenen Unterbodenfächern 3 wird in Fig. 1 gezeigt. Ein solches Schienenfahrzeug 1 weist zahlreiche elektrische Komponenten auf, welche zum Teil auf dem Fahrzeugdach, als auch am Unterflurbereich 2 in Unterbodenfächern 3 angeordnet sein können.

Fig. 2 ist eine schematische Darstellung eines Ausschnitts des Unterflurbereichs 2 des Schienenfahrzeugs 1 aus Fig. 1. Unter dem Boden 6 des Schienenfahrzeugs 1 befinden sich ein Radsatz 5 und Unterbodenfächer 3. In diesen Unterbodenfächern 3 befindet sich zum Beispiel mindestens Batterieeinheit 4, wobei diese von einem Tragsystem 10 getragen werden.

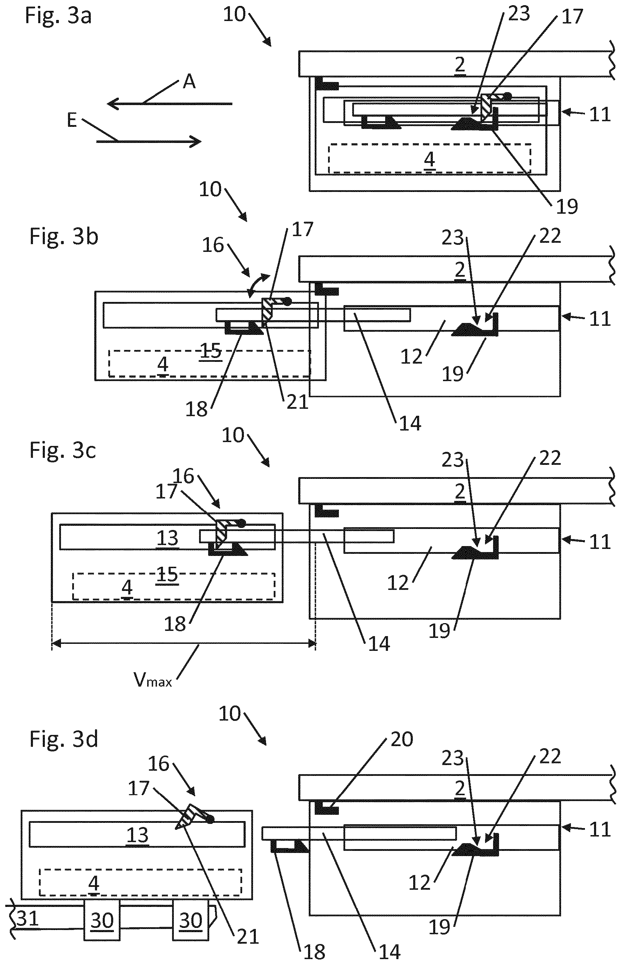

Die Fig. 3a bis 3d beschreiben eine erster Ausführungsform des Tragsystems 10. In Fig. 3a befindet sich eine Aufnahmevorrichtung 15 in einem vollständig eingeschobenen Zustand. Damit ist das gesamte Tragsystem 10, umfassend die Tragvorrichtung 11 und die Aufnahmevorrichtung 15, in der die Batterieeinheit 4 angeordnet ist, vollständig von dem Unterbodenfach 3 aufgenommen und durch den Boden 6 überdeckt.

Fig. 3b zeigt die Tragvorrichtung 10 mit einer fast vollständig in Ausziehrichtung A ausgezogenen Aufnahmevorrichtung 15. An der Aufnahmevorrichtung 15 ist die zweite Schiene 13 befestigt vorgesehen, wobei die zweite Schiene 13 verschiebbar an der dritten Schiene 14, und die dritte Schiene 14 wiederum verschiebbar an der ersten Schiene 12 gelagert ist. Wird die Aufnahmevorrichtung 15 aus dem Unterbodenfach 3 herausgezogen so erfolgt dies durch eine relative Verschiebung der zweiten Schiene 13 und dritten Schiene 14 bezüglich der ersten Schiene 12. Fig. 3c verdeutlicht den voll ausgezogenen Zustand der Aufnahmevorrichtung 15.

Im Falle einer Inspektion oder Wartung der Batterieeinheit 4 in der Aufnahmevorrichtung 15 wird gemäß Fig. 3b und Fig. 3c die Aufnahmevorrichtung 15 in Ausziehrichtung A unter dem Boden 6 aus dem Unterbodenfach 3 herausgezogen, bis die maximale Verschiebung Vₘₐₓ erreicht wird. Eine Anschlagvorrichtung 16 ist mit der zweiten Schiene 13 oder der Aufnahmevorrichtung 15 verbunden und kann aktiviert oder deaktiviert werden. Die Anschlagvorrichtung 16 ist in den Fig. 3a bis 3c jeweils in einer Sperrstellung befindlich, d.h. die Anschlagvorrichtung 16 ist aktiviert. Die Anschlagvorrichtung 16 umfasst ein Anschlagelement 17, welches in Richtung der Sperrstellung vorgespannt ist. Die nicht dargestellte Vorspannvorrichtung bewirkt, dass das Anschlagelement 17 der Anschlagvorrichtung 16 in aktiviertem Zustand immer bestrebt ist, mit einem ersten Schienenanschlag 18 in Wirkeingriff zu gehen. Dieser Zustand ist in Fig. 3c gezeigt, wobei das Anschlagelement 17 von dem ersten Schienenanschlag 18 aufgenommen ist, und dadurch eine Verschiebung der Aufnahmevorrichtung 15 in Ausziehrichtung A formschlüssig begrenzt ist. In diesem Zustand ist sichergestellt, dass die zweite Schiene 13 nicht aus der Überdeckung mit der dritten Schiene 14 herausgeleitet, somit nicht mehr getragen und zu Boden stürzen würde. Die in der Aufnahmevorrichtung 15 angeordnete Batterieeinheit 4 kann nun von Wartungspersonal überprüft werden.

Sollte eine vorzunehmende Tätigkeit an der Batterieeinheit 4 es notwendig machen, die gesamte Aufnahmevorrichtung 15 an einen anderen Ort zu transportieren, so kann diese zusammen mit der zweiten Schiene 13 gemäß Fig. 3d vollständig von der dritten Schiene 14 getrennt werden. Dazu wird die Anschlagvorrichtung 14 in Entsperrstellung gebracht. Das Anschlagelement 17 der nun deaktivierten Anschlagvorrichtung 16 nimmt dabei eine Position ein, bei welcher das Anschlagelement 17 nicht mehr in Wirkeingriff mit dem ersten Schienenanschlag 18 ist. Die Aufnahmevorrichtung 15 kann jetzt von der dritten Schiene 14 abgezogen werden. Um eine substituierende Abstützung der Aufnahmevorrichtung zu ermöglichen, wird zuvor eine Hubvorrichtung 31 unter die Aufnahmevorrichtung 15 gebracht. Dazu sind vorhergehend eine Mehrzahl von Eingriffselementen 30 an die Aufnahmevorrichtung 15 montiert worden, wobei dazu entsprechende Montagevorrichtungen an der Aufnahmevorrichtung 15 vorgesehen sind. Denkbar ist, dass die Eingriffselemente 30 als Aufnahmen für eine Gabel eines Gabelstaplers 31 ausgebildet sind, welche an einer Unterseite der Aufnahmevorrichtung 15 angeschraubt werden.

Die in diesem Ausführungsbeispiel (Fig. 3d) als Gabelstapler ausgebildete Hubvorrichtung 31 trägt vollständig die Aufnahmevorrichtung 15, welche so zum Beispiel zu einer Werkbank transportiert werden kann. Entsprechend erfolgt die Montage der Aufnahmevorrichtung 15 an der dritten Schiene 14. Mithilfe der Hubvorrichtung 31 wird die zweite Schiene 13 der Aufnahmevorrichtung 15 in eine Position gebracht, in welcher die zweite Schiene 13 mit der dritten Schiene 14 fluchtet. Nachdem die zweite Schiene 13 und die dritte Schiene 14 wieder in Eingriff gebracht worden sind, wird die Aufnahmevorrichtung 15 - gezeigt in den Fig. 3a bis 3c - gemäß einer Einschubbewegung E zurück in das Unterbodenfach 3 eingeschoben.

Dabei kommt den Rückstellmitteln 20 eine besondere Bedeutung zu. Die Rückstellmittel 20 sind so im Unterbodenfach 3 oder am Unterflurbereich 2 angeordnet, dass diese während der Einschubbewegung die Schaltposition der Anschlagvorrichtung 16 verändern. Insbesondere wird die Anschlagvorrichtung 16 immer in Sperrstellung geschaltet, sofern diese in Entsperrstellung befindlich war. Im vorliegenden Ausführungsbeispiel liegen die Rückstellmittel 20 so, dass sie eine schräge Oberseite - Richtungsangaben beziehen sich auf die Ausrichtung des Blatts der Fig. 3 - des deaktivierten Anschlagelements 17 bei der Einschubbewegung E tangieren und nach unten drücken, wodurch die Anschlagvorrichtung 16 die Sperrstellung einnimmt. So ist sichergestellt, dass die Anschlagvorrichtung 16 stets aktiviert ist, wenn die Aufnahmevorrichtung 15 in das Unterbodenfach 3 eingeschoben ist. So wird verhindert, dass bei einem Herausziehen der Aufnahmevorrichtung 15 in Ausziehrichtung A diese über die maximale Verschiebung hinaus bewegt wird und im ungünstigsten Fall zu Boden fiel und so beteiligtes Personal verletzt werden könnte.

Wie in Fig. 3c gezeigt ist, wirkt die Anschlagvorrichtung 16 mit dem ersten Schienenanschlag 18 ausschließlich in Ausziehrichtung A. Um bei aktivierter Anschlagvorrichtung 16 die Aufnahmevorrichtung 15 in das Unterbodenfach 3 einschieben zu können, ist die Anschlagvorrichtung 16 mit Entriegelungsmitteln 21 ausgestattet, welche im vorliegenden Ausführungsbeispiel als eine schräge Fläche am Anschlagelement 17 ausgebildet sind. Da das unter Vorspannung stehende Anschlagelement 17 bestrebt ist, im Wirkeingriff mit dem ersten Schienenanschlag 18 zu verbleiben, muss zur Entriegelung die Vorspannkraft überwunden werden. Dazu wird die Einschubbewegung E über die schräge Fläche des Anschlagelements 17 in eine Vertikalbewegung übersetzt, wodurch das Anschlagelement 17 zumindest kurzfristig, entgegen der Vorspannung, außer Eingriff mit dem ersten Schienenanschlag 18 geht.

Ist die Aufnahmevorrichtung 15 vollständig in das Unterbodenfach 3 eingeschoben, so ruht das Anschlagelement 17 der Anschlagvorrichtung 16 in aktiviertem Zustand in einer Aussparung 22 eines zweiten Schienenanschlags 19. Auf diese Weise befinden sich Vorspannmittel der Anschlagvorrichtung 16 in einem verhältnismäßig entspannten Zustand, wodurch die Gefahr eines Bruchs der Vorspannmittel reduziert ist.

Der zweite Schienenanschlag 19 kann dabei so ausgebildet sein, dass die Einschubbewegung E in Zusammenwirken mit dem Anschlagelement 17 begrenzt ist. Zudem weist der zweite Schienenanschlag Entriegelungsmittel 23 auf, sodass ein Ausziehen der Aufnahmevorrichtung 15 in Ausziehrichtung A nicht durch den zweiten Schienenanschlag 19 behindert wird. Der zweite Schienenanschlag 19 kann sowohl an der ersten Schiene 12 als auch an dem Unterbodenfach 3 befestigt sein.

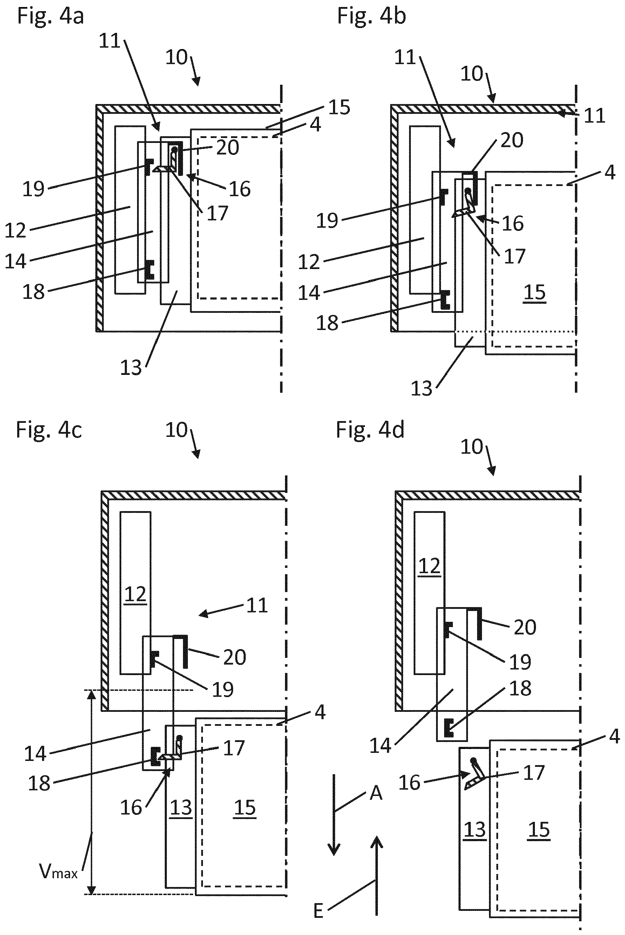

Die einzelnen Darstellungen Fig. 4a bis Fig. 4d führen ein weiteres Ausführungsbeispiel der Tragvorrichtung 10 an. Dabei ist das Unterbodenfach 3 zusammen mit der Tragvorrichtung 10 in einer horizontalen Draufsicht dargestellt. Im Wesentlichen erfolgt das Herausziehen in Ausziehrichtung A und die Einschubbewegung E der Aufnahmevorrichtung 15 analog zu dem voranstehend beschriebenen Ausführungsbeispiel.

Das Anschlagelement 17 der Anschlagvorrichtung 16 weist eine unterschiedliche Anordnung zum vorangehenden Ausführungsbeispiel auf, wobei eine maximale Verschiebung Vₘₐₓ ebenfalls durch den ersten Schienenanschlag 18 in Zusammenwirken mit dem aktivierten Anschlagelement 17 definiert ist (siehe Fig. 4 c).

Fig. 4d zeigt die entkoppelte Aufnahmevorrichtung 15 mit deaktivierter Anschlagvorrichtung 16. Da das Anschlagelement 17 der in Entsperrstellung befindlichen Anschlagvorrichtung 16 nicht in Wirkeingriff mit dem ersten Schienenanschlag 18 sein kann, kann die zweite Schiene 13 der Aufnahmevorrichtung 15 aus der Überdeckung mit der dritten Schiene 14 gezogen werden. Die Aufnahmevorrichtung 15 ist somit frei und kann an einen anderen Ort gebracht werden.

Die Aufnahmevorrichtung 15 kann gemäß den Fig. 4c bis 4a vollständig in das Unterbodenfach 3 eingeschoben werden. Es sind Rückstellmittel 20 vorgesehen, welche die deaktivierte Anschlagvorrichtung 16 beim Einschieben aktivieren und in Sperrstellung bringen kann.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Ansprüche abzuweichen.

### Bezugszeichenliste

- 1: Fahrzeug
- 2: Unterflurbereich
- 3: Unterbodenfach
- 4: Batterieeinheit
- 5: Radsatz
- 6: Boden

- 10: Tragsystem
- 11: Tragvorrichtung
- 12: erste Schiene
- 13: zweite Schiene
- 14: dritte Schiene
- 15: Aufnahmevorrichtung
- 16: Anschlagvorrichtung
- 17: Anschlagelement
- 18: erster Schienenanschlag
- 19: zweiter Schienenanschlag
- 20: Rückstellmittel
- 21: Entriegelungsmittel
- 22: Aussparung
- 23: Entriegelungsmittel

- 30: Eingriffselement
- 31: Hubvorrichtung

- A: Ausziehrichtung
- E: Einschubbewegung
- Vₘₐₓ: maximale Verschiebung

## Patentansprüche

1. Fahrzeug (1), insbesondere Schienenfahrzeug, mit einem Tragsystem (10) zur Anbringung einer austauschbaren Komponente an einem Unterflurbereich (2) des Fahrzeugs (1), wobei das Tragsystem (10) eine Aufnahmevorrichtung (15) für die Komponente und eine ausziehbare Tragvorrichtung (11) zum Abstützen der Aufnahmevorrichtung (15) am Unterflurbereich (2) aufweist,
- wobei die Tragvorrichtung (11) mindestens eine erste und eine zweite Schiene (12. 13)
aufweist,
- die erste Schiene (12) an einer Tragstruktur des Unterflurbereichs (2) befestigt ist, die zweite Schiene (13) direkt oder indirekt an der ersten Schiene (12) verschiebbar abgestützt ist, und die Aufnahmevorrichtung (15) an der zweiten Schiene (13) befestigt ist, **dadurch gekennzeichnet, dass**
- die Tragvorrichtung eine in eine Sperrstellung und in eine Entsperrstellung schaltbare Anschlagvorrichtung (16) aufweist,
- wobei die Anschlagvorrichtung (16) in Sperrstellung aktiviert ist und eine Verschiebung in Ausziehrichtung (A) der Schienen zueinander mittels eines ersten Schienenanschlags (18) einer Schiene begrenzt ist, und
- die Anschlagvorrichtung (16) in Entsperrstellung deaktiviert ist, und ein vollständiges Auseinanderziehen der Schienen (12, 13) in Ausziehrichtung ermöglicht ist.

2. Fahrzeug (1) nach Anspruch 1, **dadurch gekennzeichnet, dass** die Tragvorrichtung (11) mindestens eine dritte Schiene (14) umfasst, wobei die zweite Schiene (13) direkt oder indirekt über die dritte Schiene (14) gegenüber der ersten Schiene (12) verschiebbar abgestützt ist.

3. Fahrzeug (1) nach Anspruch 1 oder 2, **dadurch gekennzeichnet, dass** das Tragsystem (10) Rückstellmittel (20), insbesondere am Unterflurbereich(2) angeordnet, aufweist, wodurch die Anschlagvorrichtung (16) durch eine Einschubbewegung (E) der Tragvorrichtung (11) aktivierbar ist.

4. Fahrzeug (1) nach einem der voran gestellten Ansprüche, **dadurch gekennzeichnet, dass** die Anschlagvorrichtung (16) ein Anschlagelement (17) und auf das Anschlagelement (17) wirkende Vorspannmittel aufweist, wobei das Anschlagelement (17) durch die Vorspannmittel bei aktivierter Anschlagvorrichtung (16) bei Erreichen einer maximalen Verschiebung (Vₘₐₓ) der Schienen (12, 13, 14) zueinander mit dem ersten Schienenanschlag (18) in Eingriff bringbar ist.

5. Fahrzeug (1) nach Anspruch 4, **dadurch gekennzeichnet, dass** der erste Schienenanschlag (18) und/oder das Anschlagelement (17) entgegen der Ausziehrichtung (A) wirksam angeordnete Entriegelungsmittel (21) aufweist, wobei die Entriegelungsmittel (21) und das Anschlagelement (17) derart ausgebildet sind, dass das Anschlagelement (17) durch eine Einschubbewegung (E) der Tragvorrichtung (11) mittels der Entriegelungsmittel (21) außer Eingriff bringbar ist.

6. Fahrzeug (1) nach Anspruch 4 oder 5, **dadurch gekennzeichnet, dass** die Tragvorrichtung (11) einen zweiten Schienenanschlag (19) umfasst, mit dem das Anschlagelement (17) in eingeschobenem Zustand der Aufnahmevorrichtung (15) in Eingriff bringbar ist.

7. Fahrzeug (1) nach einem der Ansprüche 4 bis 6, **dadurch gekennzeichnet, dass** die Anschlagvorrichtung (16) derart ausgebildete ist und an einer Schiene angeordnet ist, und an einer anderen Schiene (12) eine Aussparung (22) derart vorgesehen ist, so dass das Anschlagelement (17) in eingeschobenem Zustand der Tragvorrichtung (11) von der Aussparung (22) zumindest teilweise aufnehmbar ist.

8. Fahrzeug (1) nach Anspruch 7, **dadurch gekennzeichnet, dass** die Aussparung (22) und/oder das Anschlagelement (17) in Ausziehrichtung wirksam angeordnete Entriegelungsmittel (23) aufweist, wobei Entriegelungsmittel (23) und Anschlagelement (17) derart ausgebildet sind, dass das Anschlagelement (17) durch eine Ausziehbewegung (A) der Tragvorrichtung (11) mittels der Entriegelungsmittel (23) entgegen der Vorspannrichtung bewegbar ist.

9. Fahrzeug (1) nach einem der voran gestellten Ansprüche, **dadurch gekennzeichnet, dass** die Aufnahmevorrichtung (15) oder zweite oder die dritte Schiene (13; 14) Mittel zur Befestigung eines Eingriffselements (30) zum Eingreifen einer externen Hubvorrichtung (31) aufweist.

10. Fahrzeug (1) nach einem der voran gestellten Ansprüche, **gekennzeichnet durch** ein Unterbodenfach (3) im Unterflurbereich (2), wobei die Aufnahmevorrichtung (15) und die Tragvorrichtung (11) in eingeschobenem Zustand vollständig in dem Unterbodenfach (3) aufnehmbar sind.

11. Fahrzeug (1) nach einem der voran gestellten Ansprüche, **dadurch gekennzeichnet, dass** die Komponente eine Batterieeinheit (4) ist, wobei Mittel zum elektrischen und/oder mechanischen Verbinden der Batterieeinheit mit elektrischen Bauteilen im Fahrzeug (1) und/oder mit der Tragvorrichtung (11) vorgesehen sind.

12. Verfahren zum Ausbau einer austauschbaren Komponente eines Fahrzeugs (1) nach einem der voranstehenden Ansprüche, aufweisend die Schritte
a) Herausziehen der Aufnahmevorrichtung (15) aus einem Unterbodenfach (3) im Unterflurbereich (2),
b) Befestigen eines Eingriffselements (30) an der Aufnahmevorrichtung (15) oder der zweiten oder dritten Schiene (13, 14),
c) Anordnen der einer Hubvorrichtung (31) wirksam am Eingriffselement (30),
d) Deaktivieren der Anschlagvorrichtung (16),
e) vollständiges Trennen mindestens zweier Schienen (13, 14) voneinander, und
f) Entfernen der Aufnahmevorrichtung (15) mittels der Hubvorrichtung (31).

13. Verfahren nach Anspruch 12, wobei vor Schritt f) elektrische und/oder mechanische Mittel zur Verbindungen der Komponente und dem Fahrzeug (1) unterbrochen werden.

14. Verfahren zum Einbau einer austauschbaren Komponente eines Fahrzeugs (1) nach einem der voranstehenden Ansprüche 1 bis 10, aufweisend die Schritte
a) Bewegen der Aufnahmevorrichtung (15) mittels einer Hubvorrichtung (31) in eine geeignete Einbauposition vor einem Unterbodenfach (3) im Unterflurbereich (2),
b) Bewegen einer Schiene (13, 14) derart, dass diese mit einer anderen Schienen (13, 14) zur Abstützung der Aufnahmevorrichtung (15) geeignet miteinander im Eingriff stehen,
c) Entfernen eines Eingriffselements (30) von der Aufnahmevorrichtung (15) oder der zweiten oder dritten Schiene (13, 14), und
d) Einschieben des Tragsystems (10) in das Unterbodenfach (3).

15. Verfahren nach Anspruch 14, wobei vor Schritt d) elektrische und/oder mechanische Mittel zur Verbindungen der Komponente und dem Fahrzeug (1) hergestellt werden.

## Claims

1. A vehicle (1), particularly a rail vehicle, having a carrier system (10) for attaching a replaceable component to an underfloor region (2) of the vehicle (1),
- wherein the carrier system (10) comprises an accommodating device (15) for the component and a pull-out carrier device (11) for supporting the accommodating device (15) at the underfloor region (2),
- wherein the carrier device (11) comprises at least one first and one second rail (12, 13),
- the first rail (12) is fastened on a carrier structure of the underfloor region (2), the second rail (13) is supported directly or indirectly in a displaceable manner on the first rail (12), and the accommodating device (15) being fastened to the second rail (13), **characterized in that**
- the carrier device has a stop device (16) which can be switchable arranged in an a locked position and in an unlocked position,
- wherein the stop device (16) is activated in the locked position and displacement in the pull-out direction (A) of the rails with respect to one another is delimited by means of a first rail stop (18) of a rail, and
- the stop device (16) is deactivated in the unlocked position, and a complete pulling apart of the rails (12, 13) in the pull-out direction is enabled.

2. The vehicle (1) according to claim 1, **characterized in that** the carrier device (11) comprises at least one third rail (14), wherein the second rail (13) is supported in a displaceable manner with respect to the first rail (12) directly or indirectly by the third rail (14).

3. The vehicle (1) according to claim 1 or 2, **characterized in that** the carrier system (10) comprises reactivation means (20), in particular arranged at the underfloor region (2), by which the stop device (16) can be activated by means of a push-in movement (E) of the carrier device (11).

4. The vehicle (1) according to one of the preceding claims, **characterized in that** the stop device (16) has a stop element (17) and prestressing means acting on the stop element (17), wherein the stop element (17) can be brought into engagement with the first rail stop (18) with the help of the prestressing means, if the stop device (16) is activated and if a maximum displacement (Vmax) of the rails (12, 13, 14) with respect to one another is reached.

5. The vehicle (1) according to claim 4, **characterized in that** the first rail stop (18) and/or the stop element (17) has unlocking means (21) effectively arranged contrary to the pull-out direction (A), wherein the unlocking means (21) and the stop element (17) are configured such that the stop element (17) can be brought out of engagement by a push-in movement (E) of the carrier device (11) by means of the unlocking means (21).

6. The vehicle (1) according to claim 4 or 5, **characterized in that** the carrier device (11) comprises a second rail stop (19), by which the stop element (17) can be brought into engagement in the pushed-in state of the accommodating device (15).

7. The vehicle (1) according to one of claims 4 to 6, **characterized in that** the stop device (16) is configured and arranged such, and that a recess (22) is provided on a different rail (12) such that the stop element (17) in the pushed-in state of the carrier device (11) can be accommodated at least to some extent by the recess (22).

8. The vehicle (1) according to claim 7, **characterized in that** the recess (22) and/or the stop element (17) has unlocking means (23) effectively arranged in the pull-out direction, wherein unlocking means (23) and stop element (17) are configured such that with the help of the unlocking means (23) and by a pull-out movement (A) of the carrier device (11) the stop element (17) can be moved counter to the prestressing direction.

9. The vehicle (1) according to one of the preceding claims, **characterized in that** the accommodating device (15) or the second or the third rail (13; 14) comprises means for fastening an engagement element (30) for engaging an external lifting device (31).

10. The vehicle (1) according to one of the preceding claims, **characterized by** an underfloor compartment (3) in the underfloor region (2), wherein the accommodating device (15) and the carrier device (11) in the pushed-in state can be accommodated completely in the underfloor compartment (3).

11. The vehicle (1) according to one of the preceding claims, **characterized in that** the component is a battery unit (4), wherein means are provided for electrically and/or mechanically connecting the battery unit to electrical components in the vehicle (1) and/or to the carrier device (11).

12. A method for removing a replaceable component of a vehicle (1) according to one of the preceding claims, having the steps
a) pulling the accommodating device (15) out of an underfloor compartment (3) in the underfloor region (2),
b) fastening an engagement element (30) on the accommodating device (15) or the second or third rail (13, 14),
c) effectively arranging a lifting device (31) at the engagement element (30),
d) deactivating the stop device (16),
e) completely separating at least two rails (13, 14) from one another, and
f) removing the accommodating device (15) by means of the lifting device (31).

13. The method according to claim 12, wherein before step f), electrical and/or mechanical means for connections of the component and the vehicle (1) are interrupted.

14. A method for installing a replaceable component of a vehicle (1) according to one of the preceding claims 1 to 10, having the steps
a) moving the accommodating device (15) by means of a lifting device (31) into a suitable installation position in front of an underfloor compartment (3) in the underfloor region (2),
b) moving a rail (13, 14) in such a manner that the same and a different rail (13, 14) are in engagement with one another in a suitable manner for supporting the accommodating device (15),
c) removing an engagement element (30) from the accommodating device (15) or the second or third rail (13, 14), and
d) pushing the carrier system (10) into the underfloor compartment (3).

15. The method according to claim 14, wherein before step d), electrical and/or mechanical means are engaged for connecting the component and the vehicle (1).

## Revendications

1. Véhicule (1), en particulier véhicule ferroviaire, comprenant un système de support (10) pour le montage d'une pièce interchangeable sur une zone située sous le plancher (2) du véhicule (1), le système de support (10) comprenant un dispositif de logement (15) pour la pièce et un dispositif de support (11) extensible pour servir d'appui au dispositif de logement (15) sur la zone située sous le plancher (2),
- le dispositif de support (10) comprenant au moins un premier et un deuxième rail (12, 13),
- le premier rail (12) étant fixé sur une structure de support de la zone située sous le plancher (2), le deuxième rail (13) étant directement ou indirectement en appui coulissant sur le premier rail (12), et le dispositif de logement (15) étant fixé au deuxième rail (13), **caractérisé en ce que**
- le dispositif de support comprend un dispositif de butée (16) pouvant passer dans une position de blocage et dans une position de déblocage,
- le dispositif de butée (16) étant activé dans la position de blocage et un coulissement dans la direction d'extension (A) des rails les uns par rapport aux autres étant limité au moyen d'une première butée de rail (18) d'un rail, et
- le dispositif de butée (16) étant désactivé dans la position de déblocage, et un allongement intégral des rails (12, 13) dans la direction d'extension étant possible.

2. Véhicule (1) selon la revendication 1, **caractérisé en ce que** le dispositif de support (11) comporte au moins un troisième rail (14), le deuxième rail (13) étant directement ou indirectement en appui coulissant par rapport au premier rail (12) par l'intermédiaire du troisième rail (14).

3. Véhicule (1) selon la revendication 1 ou 2, **caractérisé en ce que** le système de support (10) comprend des moyens de rappel (20), en particulier agencés sur la zone située sous le plancher (2), ce qui a pour effet que le dispositif de butée (16) peut être activé par un mouvement de rétractation (E) du dispositif de support (11).

4. Véhicule (1) selon l'une quelconque des revendications précédentes, **caractérisé en ce que** le dispositif de butée (16) comprend un élément de butée (17) et des moyens de précontrainte agissant sur l'élément de butée (17), l'élément de butée (17) étant apte à être amené en contact avec la première butée de rail (18) par les moyens de précontrainte lorsque le dispositif de butée (16) est activé et lorsqu'un coulissement maximal (Vₘₐₓ) des rails (12, 13, 14) les uns par rapport aux autres est atteint.

5. Véhicule (1) selon la revendication 4, **caractérisé en ce que** la première butée de rail (18) et/ou l'élément de butée (17) comprennent des moyens de déverrouillage (21) agencés de manière à agir à l'encontre de la direction d'extension (A), les moyens de déverrouillage (21) et l'élément de butée (17) étant conçus de telle manière que l'élément de butée (17) est apte à être amené hors de contact à l'aide des moyens de déverrouillage (21) à la suite d'un mouvement de rétractation (E) du dispositif de support (11).

6. Véhicule (1) selon la revendication 4 ou 5, **caractérisé en ce que** le dispositif de support (11) comporte une deuxième butée de rail (19) avec laquelle l'élément de butée (17) peut être amené en contact une fois le dispositif de logement (15) rétracté.

7. Véhicule (1) selon l'une quelconque des revendications 4 à 6, **caractérisé en ce que** le dispositif de butée (16) est conçu et agencé sur un rail et un évidement (22) est ménagé sur un autre rail (12) de telle manière que l'élément de butée (17) peut être logé au moins en partie par l'évidement (22) une fois le dispositif de support (11) rétracté.

8. Véhicule (1) selon la revendication 7, **caractérisé en ce que** l'évidement (22) et/ou l'élément de butée (17) comprennent des moyens de déverrouillage (23) agencés de manière à agir dans la direction d'extension, les moyens de déverrouillage (23) et l'élément de butée (17) étant conçus de telle manière que l'élément de butée (17) peut être déplacé à la suite d'un mouvement d'extension (A) du dispositif de support (11) à l'aide des moyens de déverrouillage (23) à l'encontre de la direction de précontrainte.

9. Véhicule (1) selon l'une quelconque des revendications précédentes, **caractérisé en ce que** le dispositif de logement (15) ou le deuxième ou le troisième rail (13 ; 14) comprend des moyens pour la fixation d'un élément de mise en contact (30) pour la mise en contact d'un dispositif de levage (31) externe.

10. Véhicule (1) selon l'une quelconque des revendications précédentes, **caractérisé par** un compartiment de dessous de caisse (3) dans la zone située sous le plancher (2), le dispositif de logement (15) et le dispositif de support (11), une fois rétractés, pouvant être intégralement logés dans le compartiment de dessous de caisse (3).

11. Véhicule (11) selon l'une quelconque des revendications précédentes, **caractérisé en ce que** la pièce est une unité batterie (4), des moyens pour la liaison électrique et/ou mécanique de l'unité batterie aux composants électriques dans le véhicule (1) et/ou au dispositif de support (11) étant prévus.

12. Procédé de démontage d'une pièce interchangeable d'un véhicule (1) selon l'une quelconque des revendications précédentes, comprenant les étapes consistant
a) à extraire le dispositif de logement (15) d'un compartiment de dessous de caisse (3) dans la zone située sous le plancher (2),
b) à fixer un élément de mise en contact (30) sur le dispositif de logement (15) ou le deuxième ou le troisième rail (13, 14),
c) à agencer un dispositif de levage (31) de manière active sur l'élément de mise en contact (30),
d) à désactiver le dispositif de butée (16),
e) à séparer intégralement au moins deux rails (13, 14) l'un de l'autre, et
f) à retirer le dispositif de logement (15) au moyen du dispositif de levage (31).

13. Procédé selon la revendication 12, des moyens électriques et/ou mécaniques permettant la liaison de la pièce et le véhicule (1) étant interrompus avant l'étape f).

14. Procédé de montage d'une pièce interchangeable d'un véhicule (1) selon l'une quelconque des revendications 1 à 10, comprenant les étapes consistant
a) à déplacer le dispositif de logement (15) au moyen d'un dispositif de levage (31) dans une position de montage adaptée devant un compartiment de dessous de caisse (3) dans la zone située sous le plancher (2),
b) à déplacer un rail (13, 14), de telle manière que celui-ci est en contact avec un autre rail (13, 14) de manière adaptée pour servir d'appui au dispositif de logement (15),
c) à retirer un élément de mise en contact (30) du dispositif de logement (15) ou du deuxième ou troisième rail (13, 14), et
d) à rétracter le système de support (10) dans le compartiment de dessous de caisse (3).

15. Procédé selon la revendication 14, des moyens électriques et/ou mécaniques permettant une liaison entre l'élément et le véhicule (1) étant établis avant l'étape d).
